(19) Europäisches Patentamt European Patent Office Office européen des brevets

(11) **EP 2 183 304 B1**

(12) **EUROPEAN PATENT SPECIFICATION**

(45) Date of publication and mention of the grant of the patent:
**23.11.2011  Bulletin 2011/47**

(21) Application number: **08796357.5**

(22) Date of filing: **21.07.2008**

(51) Int Cl.:
*C08J 3/00* (2006.01)        *C08L 95/00* (2006.01)
*E01C 7/26* (2006.01)

(86) International application number:
**PCT/US2008/070619**

(87) International publication number:
**WO 2009/025947 (26.02.2009 Gazette 2009/09)**

(54) **METHOD AND PRODUCT OF MAKING A POLYMER-BINDER COMPOSITE**

VERFAHREN ZUR HERSTELLUNG EINES KUNSTSTOFF-BINDEMITTEL-VERBUNDWERKSTOFFS UND DAS PRODUKT

PROCÉDÉ ET PRODUIT DE FABRICATION D'UN COMPOSITE LIANT DE POLYMÈRE

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority:  **20.08.2007  US 841441
15.07.2008  US 173571**

(43) Date of publication of application:
**12.05.2010  Bulletin 2010/19**

(73) Proprietor: **Road Science, LLC
Tulsa, OK 74136 (US)**

(72) Inventors:
• **BARNAT, James, J.**
  **Tulsa, OK 74133 (US)**
• **VOPAT, F., Vincent**
  **Tulsa, OK 74137 (US)**
• **PRICE, Ronnie, J.**
  **Sapulpa, OK 74066 (US)**

(74) Representative: **Lerwill, John et al
A.A. Thornton & Co.
235 High Holborn
London, WC1V 7LE (GB)**

(56) References cited:
DE-A1- 2 441 203        US-A- 5 314 935
US-A1- 2007 112 102    US-B2- 7 202 290

EP 2 183 304 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### 1. Field of the Invention

The present invention relates to a method and product of making a polymer-bituminous binder composite. More specifically, the present invention is a method for making a polymer-bituminous binder composite that can be accomplished in less than one hour employing a high shear and/or high pressure method to produce a composite containing a large percentage of polymers. The composite can be further processed by cutting it into pellets that are dry and stable at normal temperatures and which can be stored or transported to secondary mixing locations for mixing with additional bituminous binder. This secondary mixing facility may also be a hot mix plant whereby the pellets are added to the mixture and incorporated in the mix plant with aggregate and asphalt or in the field during lay down.

### 2. Description of the Related Art

A polymer molecule has a high molecular mass and is composed of many smaller, repeating subunits or monomers. Polymers found in nature include DNA and proteins found in living cells. Polymer molecules come in many shapes and sizes. A polymer molecule may be a long chain of a single monomer repeated over and over again or can be a complex network containing dozens of different types of monomers. It is the identity, variety and arrangement of the monomers that compose a polymer molecule that determine the molecule's chemical and physical properties.

Polymers chemistry is pervasive. The American Chemical Society estimates that 50% of chemistry professionals will work in a polymer related field for some portion of their career. This is because polymers are used in such a wide range of applications. These applications range from artificially created proteins, to synthetic fiber and fabrics, to plastics, and to additives for other products because of the desirable characteristics that the polymers impart to those products.

The use of polymer composites allow the compounding or reacting of various chemicals into a single form for use as building materials, insulation, gels, catalysts, adhesives, sealants, automotive products, and a host of other industrial and commercial products.

Polymer composites that employ asphalt as a binder or extender can be used in numerous industries that require enhanced adhesive or cohesive properties like roofing, road building, flooring, and essentially any industry that uses adhesives.

Asphaltic concrete, which typically includes asphalt and aggregate and other asphalt compositions, must exhibit certain specific physical or mechanical properties to enable its use in various fields of application, particularly when used as binders for road surfacing, as asphalt emulsions and for industrial applications. The term "asphalt" used herein refers to petroleum based bitumen, but the teaching of this invention can also be applied other types of bituminous materials.

Conventional asphalts often do not retain sufficient elasticity and have a plasticity range that is too narrow for use in many applications, such as for example in road construction. The use of asphalt or asphalt emulsion binders is enhanced if these binders can be modified so they possess the requisite levels of elasticity and plasticity. The performance characteristics of road asphalts are greatly improved by incorporating polymers into them. These modified binders exhibit superior rheological behavior. Such polymers may be butyl, polybutadiene, polyisoprene or polyisobutene rubber, or other ethylene-butadiene polymers. Other polymers may include ethylene/vinyl acetate copolymer, polyacrylate, polymethacrylate, polychloroprene, polymorbornene, ethylene/propylene/diene (EPDM) terpolymer and a random or block copolymer of styrene and a conjugated diene. The modified asphalts that are thus produced are .commonly referred to as polymer/bitumen binders or polymer/asphalt binders. These polymer modified asphalts and asphalt emultions typically are produced utllizing styrene/butadiene based polymers, and they typically have a raised softening point, increased viscoelasticity, enhanced force under strain, anhaneed strain recovery, and improved low temperature strain characteristics. If the polymermodified asphalts and asphalt emultions are to be employed for road construction or repair, the addition of polymer to the bituminous binder material improves the rheological properties and results in pavement material that is stiffer and less susceptible to rutting U.S. Patent No. 5,3314,935 issued to Chaverot et al, teaches famillies of crosslink agents, and U.S. Patent No. 4,242,246 to Maldanado et al., teaches various polymers and asphalt modifiers.

Polymer enhanced or modified asphalts are routinely used in the road construction, road maintenance, and roofing industries. Polymer-bituminous-binder composites can be used in many applications, including, but not limited to, roofing, adhesives, mastics, and road construction where the composites are polymer enhanced bitumen cements. For purposes of illustration only, the invention will be described primarily herein as polymer enhanced asphaltic concrete used in association with road building applications, but the invention is not so limited and can be employed in any number of other applications and with any type of bituminous binder.

These polymer-bitumen composites can be used in a number of ways. First, they can be diluted with additional binder to lower polymer concentrations to derive the desired physical properties of the resultant binder. The composite can be used as-is and directly added to the final product such as hot mix asphalt. Here the composite is added as a separate stream to the mixing process and is incorporated as the composite. Finally, the composite can be further processed to yield additional rheological properties or another physical form that may be more convenient for the desired process.

In order to achieve a given level of modified asphalt performance, various polymers are added to the asphalt or bituminous binder at some prescribed concentration. Current practice is to add the desired level of one or more polymers, sometimes along with a reactant which promotes crosslinking of the polymer molecules until the desired rheological properties are met. A typical reactant used is sulfur in a form that is suitable for crosslinking. The cost of the polymer adds signifcantly to the overall cost of the resulting asphalt/polymer composite mix. Thus, the use of the polymer is a factor in the ability to meet the desired physical mechanical and economic criteria. Also, at increased concentration levels of polymer, the working viscosity of the asphalt mix .becomes too great and resumes excessive temperatures to handle. These excessive temperatures degrade the polymer and the rheological performance of the polymer-binder composite.

Typically, these bituminous-polymer binder cpmposites are made jn a number of ways: one being a low shear mixing method and another being a medium shearing mixing method.

The low shear method is the typical method employed in creating polymer-binder composites for use in many applications like the road building industry. This method employs a low shear mixer such as the type manufactured by MixMor at 3131 Casitas Avenue, Los Angeles, Califonia 90039. In the low shear method, the binder is heated until sufficiently fluid before the polymer pellets are added to the mixer. Typically this temperature is approximately 350 - 450° F (176°C-232°C) if asphalt is employed as the binder. The mixer will b.e operated at a shear rate of less than 5 s$^{-1}$, with a mixing pressure of approximately 0-10 psi (0-68950 Pa). The polymer composite is mixed until the polymer disperses or becomes soluble in the binder. The process time is usually greater than 3 hours to achieve full solubility of the polymer in the binder at a concentration of typically about 6 wt. % polymers. A polymer concentration of 6 wt. % is typical Since the polymer thickens the composite mixture and higher concentrations of polymer result in a mixture that is too thick to process in a low shear mixing process. Approximately 20 wt. % polymer concentration is the upper limit of polymer concentration possible in the composite using this low shear method which as only achievable with low polymer molecutar weight or highly branched polymer. At polymer concentrations above approximately 2D wt. %, the composite becomes too viscous to mix.

This low shear method of making polymer-buider composites is carrently employed where the initial 6+ wt. % polymer composite is trucked in a hot state to secondary mixing facilities where the composite is then further diluted with bitumen binder to produce the final composite material that is ready for use in applications such as road building. The polymers concentration in the final composite material produced in the secondary mixing facilities is approximately 2 to 5 wt. % polymer in the bitumen. This centralized distribution system is employed because of the large mixing equipment cost involved in the initial mixing of the polymer and the binder to produce the 6+ wt. % polymer composite. Less expensive low shear mixers are used at the destination facilities to mix the composite with additional binder. By having an expensive central processing facility that can then supply composite to several lesser expensive destination facilities, the total cost of facilities needed to produce the composite material needed for such applications as road building is reduced.

Alternately, the secondary mixing facility may be a hot mix plant whereby the pellets are added to the mixture and incorporated in the mix plant with aggregate and asphalt or in the field during lay down.

The second method for producing polymer-binder composites is the medium shear method. The medium shear method employs mills such as the type manufactured under the Supraton® trademark by the German company Buckau-Wolf, the MP10S mill produced by Dalworth Machine Products, Inc. located at 5136 Saunders Road, Fort Worth, Texas 76119, or a colloid mill such as the those manufactured under the Charlotte® trademark and available from Chemicolloid Laboratories Inc., 55 Herricks Road, Garden City Park, New York 11040-5260.

In the medium shear method, the liquid bitumen cement and polymer pellets are heated to a temperature of between approximately 350-450 °F (176°C-232°C) in a pre-wet tank before being pumped through the shearing zone of the mill and into a tank from which a recirculation line allows the mixture to be repeatedly parsed through the shearing zone until the desired solubility is achieved. Alternately, in some equipment the solid polymer is fed directly to the mill. These types or system usually circulate the polymer-bitumen composite continuously through the mill until it is dispersed. The mill will be operated at a shear rate of greater than 25,000 s$^{-1}$ but at very low resident times, with a mixing -pressure of approximately 35-50 psi (241300-344700 Pa). Under these conditions, the mix time is approximately 1-4 hours to achieve full solubility of the polymers in the bitumen blinder at a concentrations of typically 12-15 wt. % polymers, Approximately 26 wt. polymer concentration is the upper limit of polymer concentration possible an the composite using this medium shear method. The medium shear method is able to handle longer chain polymers up to a maximum polymer molecular weight of approximately 200,000 atomic mass units (amu).

The low and medium shear methods or making polymer-binder composites have several problems. First, the primary mining .operation takes anywhere from 3-6 .hours to complete in the low shear method. The medium shear method improves on this time by seducing the time to approximately 1-4 hours. However, it would be desirable to further reduce this mix time so that larger quantities of product could be produced faster at a given facility.

Second, the concentration of polymer in the product produced by the primary mixing operation using the low shear method is only about 6 wt. %. Employing the medium shear method, the concentration is only 12-15 wt. %. Even with the medium shear method, the polymer concentration is limited to a maximum of approximately 26 wt. %. It would be desirable if the polymer concentration was much higher, possibly in the 90+ wt. % range, since this would reduce the amount of bitumen that would have to be trucked from the primary mixing facility to the secondary mixing facilities. If the concentration of polymer could be significantly increased in the polymer-binder composite, the cost saving in transportation alone that would be realized by reducing the amount of bitumen trucked between the primary and secondary mixing facilities would be significant.

Third, the low shear method of mixing works well with polymers of molecular weights below 100,000 amu and the medium shear method works with polymers of molecular weights below 180,000 amu, but neither method works well with polymers with higher molecular weights, i.e. those polymers with molecular weights greater than 180,000 amu. The lower molecular weight polymers are molecules with shorter chain lengths than the longer chain length, higher molecular weight polymers. It would be desirable to employ longer chain polymers with molecular weights greater than 180,000 amu as these molecules would be able achieve the desired rheology for the composite at lower polymer concentrations and therefore at lower polymer cost but they are not easily dispersed and are prone to separation. This separation is due to a lack of homogeneity and this instability is measured by an industry standard Ring and Ball Separation Test. These higher molecular weight molecules have longer chains that unfold and build an efficient intra-penetrating network (IPN). This IPN builds superior rheological properties allowing the composite to better resist flowing and deformation. Also, if higher molecular weight molecules could be employed, this would also save on the cost of cross-linking agents that are needed when shorter chain length polymers are employed.

Fourth, both the low shear and medium shear methods of mixing produce a mixture that must be maintained in a heated state as it is transported via trucks to the secondary mixing facilities. It would be desirable to produce a composite product that can be handled at lower temperatures so that the product would not require that it be maintained in a heated state during transport to the secondary mixing facilities. Even more desirable would be a composite product that was so stable that it could be stored in a warehouse at ambient temperature after production and before it was transported to the secondary mixing facilities.

The present invention addresses all of these needs. The present invention reduces the primary making operation to less than an hour, usually less than 30 minutes and preferably less than 3 minutes. The present invention also produces a composite with polymer concentrations greater than 50% or greater than 90 wt. %. Further, the present invention employs longer chain, higher molecular weight polymers that require less polymer and less cross-linking agents to achieve the desired composite rheology, thereby resulting in less expense to produce the desired product. Still further, the present invention produces a product that is stable at normal temperatures and can be stored and transported without heating. Further, the present invention has the additional advantage of being instantly soluble, almost instantly soluble or soluble within less than 3 hours with bitumen when mixed with liquid bitumen at the secondary mixing facilities, thereby reducing the mix time necessary to produce the final composite needed for such applications as road building, roofing or other adhesive applications.

The present invention employs a high shear process for combining the polymer and bituminous binder such as achievable with a hugh sheer device like an extruder or a roll mill. If an extruder is employed as the high shear device, it can be either a single screw or double screw type. If the extruder is a double screw type, then it can be either a co-rotating or counter rotating type. Such extruders are manufactured by American Leistritz Extruder Corporation located at 169 Meister Avenue, Somerville, New Jersey 08876 and by American Kuhne located at 31 Connecticut Avenue, Norwich, Connecticut 06360.

If a roll mill is employed as the high shear device, one suitable type of roll mill is manufactured under the BanBury® trademark by Qingdao Yadong Rubber Machinery Group Co., Ltd. in Qingdao, China and is available through various distributors worldwide. These high shear devices operate at a shear rate of greater then 1000 s$^{-1}$, at pressures greater than 100 psi and can mix the polymer and binder together in less than an hour, usually in just a matter of minutes. Concentrations greater than 90 wt. % polymer are achievable with this method. The composite can be extruded and cut into pellets that are stable at normal temperatures and can be stored in warehouses and later transported to secondary mixing facilities. These pellets have the additional benefit of mixing instantly, almost instantly or within less than 3 hours when added to additional binder in the low shear mixers at the secondary mixing facilities.

Although U.S. Patent No. 7,202,290 to Stuart, Jr. at al. discloses an extruder to create a pellet compounded from an elastomer, a plastomer, a crosslinking agent and asphalt, it does not define the role of the extruder in terms of total amount of shear or energy utilized to produce the composite. Also, in that invention, the plastomer was employed to hide the cross linking agent from the elastomer so a combination pellet could be produced without cross linking of the elastomer.

U.S. Patent No. 5,393,819 to Peters teaches a composition of an asphalt modifier created by preparing a pre-associated combination of polytetrafluoroethylene (PTFE) and $MoS_2$ particles and later adding this to an elastomer in an extruder to create the asphalt modifier. This patent does not mention the benefits of higher shear processing as well as the potential to add crosslinking materials. Also, the use of the extruder in this patent is for polymer processing, not asphalt incorporation. Further, this patent does not speak of enhanced solubility of the composite into the diluent binder.

## SUMMARY OF THE INVENTION

The present invention is a method for making a polymer-binder composite and the polymer-binder composite produced.

The present invention provides a method of making a polymer-binder composite comprising:

feeding greater than 50 wt.% of at least one polymer and at least one binder into a high shear device to produce a polymer binder composite that is stable at normal temperatures and can be stored and transported without heating.

The present invention further provides a polymer-binder composite comprising:

greater than 50 wt.% of at least one polymer and at least one binder mixed together in a high shear device to form a composite mixture that is stable at normal temperatures and can be stored without heating.

More specifically, the present invention is a method for making a polymer-binder composite that can be accomplished in less than one hour, and usually within a matter of minutes, employing a high shear and high pressure method. The present invention produces a composite that contains a large percentage of polymers, i.e. greater than 50 wt. %, or greater than 90 wt. %. The composite is created with polymers of high molecular weight, i.e. molecular weights greater than 100,000 amu, greater than 150,000 amu, or greater than 200,000 amu. The composite thus produced can be cooled and cut into pellets that are dry and stable at normal temperatures and which can be stored or transported without heating to secondary mixing locations for mixing with additional binder.

Further, the present invention has the additional advantage of mixing and solubilizing instantly, almost instantly or within less than 3 hours with additional binder when mixed with the additional binder at the secondary mixing facilities, thereby reducing the mix time necessary to produce the final composite needed for the desired application. Applications where the final composite may be employed can include, but are not limited to, road building, roofing, adhesives and mastics.

The present invention employs high shear device such as an extruder or a roll mill. If an extruder is employed, it can be either a single screw or double screw type and if a double screw type, then can be either a co-rotating or counter rotating type. These high shear devices can operate at a shear rate of greater than 1000 $s^{-1}$, at pressures greater than 2000 psi (13.79 mPa).

This method is capable of producing polymer binder composite with a polymer concentration less than 99.9 wt. %, with a bituminous material or binder concentration less than 74 wt. %, and with an additive concentration of less than 50 wt.%.

## DETAILED DESCRIPTION OF THE PREFFERED EMBODIMENT

The present invention is a method for making a polymer-binder composite and the polymer-binder composite thus produced. The present invention is a method for making a stable polymer-binder composite that can be accomplished in less than one hour, usually in less than 30 minutes, and preferably in less than 3 minutes, employing a high shear and/or high pressure mixing method to produce a composite containing a large percentage of polymers and employing high molecular weight polymers that will remain homogeneous. The composite thus produced can be cooled and cut into pellets that are dry and remain stable at normal temperatures and which can be stored without heating or transported without heating to secondary mixing locations for mixing with additional binders or other materials.

Further, the present invention has the additional advantage of being instantly soluble, almost immediately soluble or soluble within less than 3 hours with additional binder when mixed with the additional binder at the secondary mixing facilities, thereby reducing the mix time necessary to produce the final composite needed for such applications as road building. Although use in road building applications are discussed in association with the final composite, the invention is not so limited. The final composite can be used for other applications including, but not limited to .use in roofing, adhesives and mastics.

The present invention employs high shear mixing such as produced by a high sheer device like an extruder or a roll mill. If an extruder is emplyed, it can be either a single screw or double screw type. If the extruder is a double screw type, then it can be either a co-rotating or counter rotating type. These high shear devices operate at pressures greater than 100 psi (689500 Pa) and can mix the polymer and binder together in less than an hour, usually in less than 30 minutes, and preferably in less than 3 minutes. Also, the high viscosity of the polymer-composite is ideally processed in laminar flow. The polymer and the bituminous binder have a resident time in the mixing device sufficient to provide a polymer-binder composite that is substantially homogeneous. In one embodiment, the polymer and the bituminous binder have a resident time in the mixing device of greater than about 0.05 seconds. In another embodiment, the polymer and the bituminous binder have a resident time in the mixing device of greater than about 0.10 seconds. In a further embodiment, the polymer and the bituminous binder have a resident time in the mixing device of greater than about 0.20 seconds.

In fluid dynamics, there are three types of flow: laminar flow, turbulent flow, and transitional flow. In nonscientific terms, laminar flow is smooth, turbulent flow is rough and transitional flow is a mixture of both smooth and rough flow.

The dimensionless Reynolds number is an important parameter in equations that describe whether flow conditions lead to laminar or turbulent flow and is important in analyzing any type of flow when there is substantial velocity gradient or shear. It indicates the relative significance of the viscous effect compared to the inertia effect. The Reynolds number is proportional to the inertial forces divided by the viscous forces.

Laminar flow, which is sometimes known as streamline flow, occurs when a fluid flows in parallel layers, with no disruption between the layers. In laminar flow the Reynolds number is less than approximately 2300. Laminar flow is characterized by high momentum diffusion, low momentum convection, and pressure and velocity independence from time. Shear stress in laminar flow in independent of the density and the shear stress depends almost entirely on the viscosity.

Turbulent flow produces flow vortices, eddies and wakes which make the flow unpredictable. Turbulent flow happens in general at high flow rates. In turbulent flow the Reynolds number is generally greater than approximately 4000.

Transitional flow is a mixture of laminar and turbulent flow, with turbulence in the center of the pipe, and laminar flow near the edges. In transitional flow the Reynolds number is generally between approximately 2300-4000. Each of these flows behaves in different manners in terms of their frictional energy loss while flowing and have different equations that predict their behavior.

Although higher shear rates are achievable, the scalar shear quantity (the product of shear rate and resident time within this shear zone), resident time, or energy per unit mass are important for the present invention. Shear rate is calculated as follows:

$$S_r = V / g$$

Where: V = tip speed and g = the gap.

Table 1 below shows the resulting values for these parameters when different high shear devices are employed for the present invention. A traditional rotor stator medium shear mill like a Dalworth MP10S would typcally have a diameter of the shearing implement of 10" (25.4cm), a gap of around 040", a rotation of 3600 RPM, and a product flow rate of 350 GPM. This yields a maximum shear rate of < 50,000 s$^{-1}$. The resident time of this process within the shear zone is < 1 second. A scalar shear quantity representing $S_r$ * Resident time represent the time the product is in the highest shear zone. This scalar shear quantity is about 130. Finally, the specific energy is defined as the amount of energy utilized to produce the product and is approximately 0.055 kilowatt per kg.

Alternately, if a twin screw extruder is employed, a large commercial twin screw extruder has two shafts rotating. Ideally, the gap between the shearing implements and the wall and/or the matched element is required to be no greater than about 0.50 mm and the rotation is typically between 400 and 600 RPM. This yields a maximum shear rate of approximately 8,500 s$^{-1}$ or more. With deep flight elements, the resident time in the high shear device is about 1.23 seconds producing the necessary scalar shear quantity of approximately 10,000 and .a specific energy of approximately 0.30 kilowatt per kg within the transitional or laminar flow regime and more preferred within the laminar flow regime.

**TABLE 1**

| Device | $S^r$ Max | Resident Time - s | Energy Kilowatt/kg | Scalar Shear Qty Shear Rate*time |
|---|---|---|---|---|
| Ideal high Shear Device Production | 8,419 | 1.23 | 0.29 | 10,347 |
| Dalworth | 47,124 | 0.0036 | 0.0047 | 131 |

As described herein, the polymer and the bituminous binder can be subjected to a wide range of scalar shear quantities while being mixed. In one embodiment of the present invention, the polymer and the bituminous binder are subjected to a scalar shear quantity that is greater than about 250. In another embodiment, the polymer and the bituminous binder are subjected to a scalar shear quantity that is greater than about 1,000. In a further embodiment, the polymer and the bituminous binder are subjected to a scalar shear quantity that is greater than about 1,500.

In accordance with the present invention, a wide range of energy can be utilized while mixing the polymer and the bituminous binder. In one embodiment of the present invention, the energy utilized while mixing the polymer and the bituminous binder is greater than about 0.025 kW/kg. In another embodiment of the present invention, the energy utilized while mixing the polymer and the bituminous binder is greater than about 0.05 kW/kg. In a further embodiment of the present invention, the energy utilized while mixing the polymer and the bituminous binder is greater than about 0.10 kW/kg.

The energy utilized in accordance with the present invention was calculated by taking the product of the motor energy of the high shear device, the ratio of the motor's production rpm to the motor's max rpm, the percent torque of the motor, and the efficiency of the gear box. The energy utilized per kg is then calculated by dividing the energy utilized by the mass flow of the polymer binder composite. For the purposes of this application and the calculation of the energy utilized, 0.97 (or 97%) was used as the efficiency of the gear box.

Concentrations greater than 90 wt. % polymer are achievable with this method. The composite is extruded or rolled out of the extruder or roll mill in a long string. In fact, the present method is capable of producing polymer binder composite with a polymer concentration of less than 99.9 wt.%, with a bituminous material or binder concentration of less than 74 wt.%, and with an additive concentration of between less than 50 wt.%.

When the string of composite is cooled, it can then be cut into pellets. These pellets are stable at normal temperatures and can be stored without heating and transported without heating to secondary mixing facilities. These pellets have the additional benefit of mixing instantly, almost instantly or within less than 3 hours when added to additional binder in the low shear mixers found at the secondary mixing facilities.

This method is capable of producing polymer-binder composite with a polymer concentration of less than 99.9 wt.%, with a bituminous material or binder concentration of less than 74 wt.% and with an additive concentration of less than 50 wt. %. At least one polymer and at least one binder are fed into the high shear extruder or roll mill to produce the composite. Optionally, at least one additive is also fed into the high shear extruder or roll mill with the polymer and binder to produce the composite.

Polymers employed in the present invention may be, but are not limited to, elastomers, plastomers, elastomer/plastomer combination polymers, oligomers, monomers, and functionalized polymers, oligomers, and monomers. Elastomers may include, but are not limited to, urethane, natural rubber, epoxy, styrene-butadiene (SB), styrene-ethylene/butylene-styrene (SEBS), styrene butadiene styrene (SBS), styrene-butadiene (SBR), polyetheretherketones (PEEK), polyethylene terephthalate (PET), low-density polyethylene (LDPE), and polyethylene (PE). Plastomers may include, but are not limited to, nylon, amorphous poly-alpha-olefins (APAO), ethyl methacrylate (EMA), and ethylene-vinyl acetate (EVA).

Binders employed in the present invention may be any type of bituminous material or hydrocarbon resin, including, but not limited to, petroleum based asphalt or coal based coal tar or pitch. Typical bituminous material that can be employed as a binder in the present invention would include, but are not limited to, asphalt cement (AC), pitch, coal tar, asphalt, vacuum tar bottoms (VTB), resid, performance grade (PG) asphalts, flux, or petroleum products.

Additives employed in the present invention may include, but are not limited to, cross linkers or vulcanizing agents, inhibitors, resins/rosins, compatibilizers, fibers and surfactants. Cross linkers may include, but are not limited to, sulfur, amines, oxides and epoxides.

Inhibitors may include, but are not limited to, phenols, antioxidation chemicals and free radical scavengers. Resins/rosins may include, but are not limited to, phenolic compounds, resin/rosin acids and salts, and tofa resins. Compatibilizers may include, but are not limited to, surfactants, process oils, resins, rosins and polyphosphoric acid (PPA). Fibers may include, but are not limited to, Kevlar® fibers, cellulose, polypropylene (PP), polyethylene (PE), and polyester. Surfactants may include, but are not limited to, process oils, resins, rosins, and polyphosphoric acid (PPA).

**Claims**

1. A method of making a polymer-binder composite comprising:

   feeding greater than 50 wt.% of at least one polymer and at least one binder into a high shear device to produce a polymer binder composite that is stable at normal temperatures and can be stored and transported without heating.

2. A method of making a polymer-binder composite according to claim 1, comprising feeding greater than 90wt.% of said at least one polymer into the high shear device.

3. A method of making a polymer-binder composite according to claim 1 wherein the high shear device is a high shear extruder.

4. A method of making a polymer-binder composite according to claim 1 wherein said at least one binder is bitumen.

5. A method of making a polymer-binder composite according to claim 1 further comprising:

feeding at least one additive into the high shear device to produce the polymer binder composite; and wherein said at least one polymer is fed into the high shear device to produce a polymer concentration of less than 99.9 wt.%..

6. A method of making a polymer-binder composite according to claim 1 wherein said at least one polymer is fed into the high sheer device to produce a polymer concentration of less than 99.9 wt.%.

7. A method of making a polymer-binder composite according to claim 1 wherein the composite is produced by the high shear device in less than 3 minutes.

8. A method of making a polymer-binder composite according to claim 1 further comprising:

transporting the polymer binder composite without heating to a secondary mixing location.

9. A method of making a polymer-binder composite according to claim 8 further comprising:

mixing the polymer binder composite with additional binder at the secondary mixing location.

10. A method of making a polymer-binder composite according to claim 1 wherein said at least one polymer and said at least one binder are subjected to mixing with a resident time in the high shear device of greater than 0.05 seconds.

11. A method of making a polymer-binder composite according to claim 1 wherein said at least one polymer and said at least one binder are subjected to mixing with a resident time in the high shear device of greater than 0.10 seconds.

12. A method of making a polymer-binder composite according to claim 1 wherein said at least one polymer and said at least one binder are subjected to mixing with a resident time in the high shear device of greater than 0.20 seconds.

13. A method of making a polymer-binder composite according to claim 1 wherein said at least one polymer and said at least one binder are subjected to mixing where scalar shear quantity is greater than 250.

14. A method of making a polymer-binder composite according to claim 1 wherein said at least one polymer and said at least one binder are subjected to mixing where scalar shear quantity is greater than 1,000.

15. A method of making a polymer-binder composite according to claim 1 wherein said at least one polymer and said at least one binder are subjected to mixing wherein energy utilised is greater than 0.025 kW/kg energy in the high shear device.

16. A method of making a polymer-binder composite according to claim 1 wherein said at least one polymer and said at least one binder are subjected to mixing where energy utilised is greater than 0.05 kW/kg energy in the high shear device.

17. A method of making a polymer-binder composite according to claim 1 wherein said at least one polymer and said at least one binder are subjected to mixing where energy utilized is greater than 0.10 kW/kg energy in the high shear device.

18. A polymer-binder composite comprising:

greater than 50 wt.% of at least one polymer and at least one binder mixed together in a high shear device to form a composite mixture that is stable at normal temperatures and can be stored without heating.

19. A polymer-binder composite according to claim 18, comprising greater than 90 wt.% of said at least one polymer.

**20.** A polymer-binder composite according to claim 18 wherein said at least one binder is bitumen.

**21.** A polymer-binder composite according to claim 18 wherein said at least one polymer is at a concentration of less than 99.9 wt.%.

**22.** A polymer-binder composite according to claim 18 wherein said at least one polymer and said at least one binder are mixed together in said high shear device for less than 3 minutes.

**23.** A polymer-binder composite according to claim 18 wherein the composite mixture formed from mixing said at least one polymer and said at least one binder is made into pellets.

**24.** A polymer-binder composite according to claim 18 wherein said composite mixture is readily soluble when mixed with additional binder.

**25.** A polymer-binder composite according to claim 18 wherein said at least one polymer and said at least one binder are subjected to mixing with a resident time in the high shear device of greater than 0.05 seconds.

**26.** A polymer-binder composite according to claim 18 wherein said at least one polymer and said at least one binder are subjected to mixing with a resident time in the high shear device of greater than 0.10 seconds.

**27.** A polymer-binder composite according to claim 18 wherein said at least one polymer and said one binder are subjected to mixing with a resident time in the high shear device of greater than 0.20 seconds.

**28.** A polymer-binder composite according to claim 18 wherein said at least one polymer and said at least one binder are subjected to mixing where scalar shear quantity is greater than 250.

**29.** A polymer-binder composite according to claim 18 wherein said at least one polymer and said at least one binder are subjected to mixture where scalar shear quantity is greater than 1,000.

**30.** A polymer-binder composite according to claim 18 wherein said at least one polymer and said at least one binder are subjected to mixing wherein energy utilised is greater than 0.025 kW/kg energy in the high shear device.

**31.** A polymer-binder composite according to claim 18 wherein said at least one polymer and said at least one binder are subjected to mixing wherein energy utilised is greater than 0.05 kW/kg energy in the high shear device.

**32.** A polymer-binder composite according to claim 18 wherein said at least one polymer and said at least one binder are subjected to mixing where energy utilised is greater than 0.10 kW/kg energy in the high shear device.

**Patentansprüche**

**1.** Verfahren zum Herstellen eines Polymer-Bindemittel-Verbundwerkstoffs, umfassend:

Zuführen von mehr als 50 Gew.-% von mindestens einem Polymer und mindestens eines Bindemittels in eine Vorrichtung mit hoher Scherbeanspruchung, um einen Polymer-Bindemittel-Verbundwerkstoff zu produzieren, der bei normalen Temperaturen stabil ist und ohne Erwärmen gelagert und transportiert werden kann.

**2.** Verfahren zum Herstellen eines Polymer-Bindemittel-Verbundwerkstoffs nach Anspruch 1, umfassend Zuführen von mehr als 90 Gew.-% des mindestens einen Polymers in die Vorrichtung mit hoher Scherbeanspruchung.

**3.** Verfahren zum Herstellen eines Polymer-Bindemittel-Verbundwerkstoffs nach Anspruch 1, wobei die Vorrichtung mit hoher Scherbeanspruchung ein Extruder mit hoher Scherbeanspruchung ist.

**4.** Verfahren zum Herstellen eines Polymer-Bindemittel-Verbundwerkstoffs nach Anspruch 1, wobei das mindestens eine Bindemittel Bitumen ist.

**5.** Verfahren zum Herstellen eines Polymer-Bindemittel-Verbundwerkstoffs nach Anspruch 1, ferner umfassend:

Zuführen von mindestens einem Zusatzstoff in die Vorrichtung mit hoher Scherbeanspruchung, um den Polymer-Bindemittel-Verbundwerkstoff zu produzieren; und wobei das mindestens eine Polymer in die Vorrichtung mit hoher Scherbeanspruchung zugeführt wird, um eine Polymerkonzentration von weniger als 99,9 Gew.-% zu produzieren.

6. Verfahren zum Herstellen eines Polymer-Bindemittel-Verbundwerkstoffs nach Anspruch 1, wobei das mindestens eine Polymer in die Vorrichtung mit hoher Scherbeanspruchung zugeführt wird, um eine Polymerkonzentration von weniger als 99,9 Gew.-% zu produzieren.

7. Verfahren zum Herstellen eines Polymer-Bindemittel-Verbundwerkstoffs nach Anspruch 1, wobei der Verbundwerkstoff von der Vorrichtung mit hoher Scherbeanspruchung in weniger als 3 Minuten produziert wird.

8. Verfahren zum Herstellen eines Polymer-Bindemittel-Verbundwerkstoffs nach Anspruch 1, ferner umfassend:

Transportieren des Polymer-Bindemittel-Verbundwerkstoffs ohne Erwärmen zu einem zweiten Mischstandort.

9. Verfahren zum Herstellen eines Polymer-Bindemittel-Verbundwerkstoffs nach Anspruch 8, ferner umfassend:

Mischen des Polymer-Bindemittel-Verbundwerkstoffs mit zusätzlichem Bindemittel an dem zweiten Mischstandort.

10. Verfahren zum Herstellen eines Polymer-Bindemittel-Verbundwerkstoffs nach Anspruch 1, wobei das mindestens eine Polymer und das mindestens eine Bindemittel Mischen mit einer Verweilzeit in der Vorrichtung mit hoher Scherbeanspruchung von mehr als 0,05 Sekunden ausgesetzt werden.

11. Verfahren zum Herstellen eines Polymer-Bindemittel-Verbundwerkstoffs nach Anspruch 1, wobei das mindestens eine Polymer und das mindestens eine Bindemittel Mischen mit einer Verweilzeit in der Vorrichtung mit hoher Scherbeanspruchung von mehr als 0,10 Sekunden ausgesetzt werden.

12. Verfahren zum Herstellen eines Polymer-Bindemittel-Verbundwerkstoffs nach Anspruch 1, wobei das mindestens eine Polymer und das mindestens eine Bindemittel Mischen mit einer Verweilzeit in der Vorrichtung mit hoher Scherbeanspruchung von mehr als 0,20 Sekunden ausgesetzt werden.

13. Verfahren zum Herstellen eines Polymer-Bindemittel-Verbundwerkstoffs nach Anspruch 1, wobei das mindestens eine Polymer und das mindestens eine Bindemittel Mischen ausgesetzt werden, wobei die skalare Scherquantität größer als 250 ist.

14. Verfahren zum Herstellen eines Polymer-Bindemittel-Verbundwerkstoffs nach Anspruch 1, wobei das mindestens eine Polymer und das mindestens eine Bindemittel Mischen ausgesetzt werden, wobei die skalare Scherquantität größer als 1000 ist.

15. Verfahren zum Herstellen eines Polymer-Bindemittel-Verbundwerkstoffs nach Anspruch 1, wobei das mindestens eine Polymer und das mindestens eine Bindemittel Mischen ausgesetzt werden, wobei die genutzte Energie größer als 0,025 kW/kg Energie in der Vorrichtung mit hoher Scherbeanspruchung ist.

16. Verfahren zum Herstellen eines Polymer-Bindemittel-Verbundwerkstoffs nach Anspruch 1, wobei das mindestens eine Polymer und das mindestens eine Bindemittel Mischen ausgesetzt werden, wobei die genutzte Energie größer als 0,05 kW/kg Energie in der Vorrichtung mit hoher Scherbeanspruchung ist.

17. Verfahren zum Herstellen eines Polymer-Bindemittel-Verbundwerkstoffs nach Anspruch 1, wobei das mindestens eine Polymer und das mindestens eine Bindemittel Mischen ausgesetzt werden, wobei die genutzte Energie größer als 0,10 kW/kg Energie in der Vorrichtung mit hoher Scherbeanspruchung ist.

18. Polymer-Bindemittel-Verbundwerkstoff, umfassend:

mehr als 50 Gew.-% von mindestens einem Polymer und mindestens ein Bindemittel, die in einer Vorrichtung mit hoher Scherbeanspruchung zusammengemischt werden, um eine Verbundwerkstoff-Mischung zu produzieren, die bei normalen Temperaturen stabil ist und ohne Erwärmen gelagert werden kann.

**19.** Polymer-Bindemittel-Verbundwerkstoff nach Anspruch 18, umfassend mehr als 90 Gew.-% des mindestens einen Polymers.

**20.** Polymer-Bindemittel-Verbundwerkstoff nach Anspruch 18, wobei das mindestens eine Bindemittel Bitumen ist.

**21.** Polymer-Bindemittel-Verbundwerkstoff nach Anspruch 18, wobei das mindestens eine Polymer bei einer Konzentration von weniger als 99,9 Gew.-% ist.

**22.** Polymer-Bindemittel-Verbundwerkstoff nach Anspruch 18, wobei das mindestens eine Polymer und das mindestens eine Bindemittel in der Vorrichtung mit hoher Scherbeanspruchung für weniger als 3 Minuten zusammengemischt werden.

**23.** Polymer-Bindemittel-Verbundwerkstoff nach Anspruch 18, wobei die Verbundwerkstoff-Mischung, die aus Mischen des mindestens einen Polymers und des mindestens einen Bindemittels gebildet wird, zu Pellets hergestellt wird.

**24.** Polymer-Bindemittel-Verbundwerkstoff nach Anspruch 18, wobei die Verbundwerkstoff-Mischung leicht löslich ist, wenn sie mit zusätzlichem Bindemittel gemischt wird.

**25.** Polymer-Bindemittel-Verbundwerkstoff nach Anspruch 18, wobei das mindestens eine Polymer und das mindestens eine Bindemittel Mischen mit einer Verweilzeit in der Vorrichtung mit hoher Scherbeanspruchung von mehr als 0,05 Sekunden ausgesetzt werden.

**26.** Polymer-Bindemittel-Verbundwerkstoff nach Anspruch 18, wobei das mindestens eine Polymer und das mindestens eine Bindemittel Mischen mit einer Verweilzeit in der Vorrichtung mit hoher Scherbeanspruchung von mehr als 0,10 Sekunden ausgesetzt werden.

**27.** Polymer-Bindemittel-Verbundwerkstoff nach Anspruch 18, wobei das mindestens eine Polymer und das mindestens eine Bindemittel Mischen mit einer Verweilzeit in der Vorrichtung mit hoher Scherbeanspruchung von mehr als 0,20 Sekunden ausgesetzt werden.

**28.** Polymer-Bindemittel-Verbundwerkstoff nach Anspruch 18, wobei das mindestens eine Polymer und das mindestens eine Bindemittel Mischen ausgesetzt werden, wobei die skalare Scherquantität größer als 250 ist.

**29.** Polymer-Bindemittel-Verbundwerkstoff nach Anspruch 18, wobei das mindestens eine Polymer und das mindestens eine Bindemittel Mischen ausgesetzt werden, wobei die skalare Scherquantität größer als 1000 ist.

**30.** Polymer-Bindemittel-Verbundwerkstoff nach Anspruch 18, wobei das mindestens eine Polymer und das mindestens eine Bindemittel Mischen ausgesetzt werden, wobei die genutzte Energie größer als 0,025 kW/kg Energie in der Vorrichtung mit hoher Scherbeanspruchung ist.

**31.** Polymer-Bindemittel-Verbundwerkstoff nach Anspruch 18, wobei das mindestens eine Polymer und das mindestens eine Bindemittel Mischen ausgesetzt werden, wobei die genutzte Energie größer als 0,05 kW/kg Energie in der Vorrichtung mit hoher Scherbeanspruchung ist.

**32.** Polymer-Bindemittel-Verbundwerkstoff nach Anspruch 18, wobei das mindestens eine Polymer und das mindestens eine Bindemittel Mischen ausgesetzt werden, wobei die genutzte Energie größer als 0,10 kW/kg Energie in der Vorrichtung mit hoher Scherbeanspruchung ist.

**Revendications**

**1.** Procédé de fabrication d'un composite de liant polymère comprenant :

l'introduction de plus de 50% en poids d'au moins un polymère et d'au moins un liant dans un dispositif de cisaillement élevé afin de produire un composite de liant polymère stable aux températures normales et pouvant être stocké et transporté sans chauffage.

**2.** Procédé de fabrication d'un composite de liant polymère selon la revendication 1, comprenant l'introduction de plus de 90% en poids dudit au moins un polymère dans le dispositif de cisaillement élevé.

3. Procédé de fabrication d'un composite de liant polymère selon la revendication 1, dans lequel le dispositif de cisaillement élevé est une extrudeuse à cisaillement élevé.

4. Procédé de fabrication d'un composite de liant polymère selon la revendication 1, dans lequel ledit au moins un liant est du bitume.

5. Procédé de fabrication d'un composite de liant polymère selon la revendication 1, comprenant en outre :

l'introduction d'au moins un additif dans le dispositif de cisaillement élevé afin de produire le composite de liant polymère ; et dans lequel ledit au moins un polymère est introduit dans le dispositif de cisaillement élevé afin de produire une concentration de polymère de moins de 99,9% en poids.

6. Procédé de fabrication d'un composite de liant polymère selon la revendication 1, dans lequel ledit au moins polymère est introduit dans le dispositif de cisaillement élevé afin de produire une concentration de polymère de moins de 99,9% en poids.

7. Procédé de fabrication d'un composite de liant polymère selon la revendication 1, dans lequel le composite est produit par le dispositif de cisaillement élevé pendant moins de 3 minutes.

8. Procédé de fabrication d'un composite de liant polymère selon la revendication 1, comprenant en outre :

le transport du composite de liant polymère sans chauffage à un emplacement de mélange secondaire.

9. Procédé de fabrication d'un composite de liant polymère selon la revendication 8, comprenant en outre :

le mélange du composite de liant polymère avec un liant supplémentaire à l'emplacement de mélange secondaire.

10. Procédé de fabrication d'un composite de liant polymère selon la revendication 1, dans lequel ledit au moins un polymère et ledit au moins un liant sont soumis à un mélange avec un temps de séjour dans ledit dispositif de cisaillement élevé de plus de 0,05 seconde.

11. Procédé de fabrication d'un composite de liant polymère selon la revendication 1, dans lequel ledit au moins un polymère et ledit au moins un liant sont soumis à un mélange avec un temps de séjour dans ledit dispositif de cisaillement élevé de plus de 0,10 seconde.

12. Procédé de fabrication d'un composite de liant polymère selon la revendication 1, dans lequel ledit au moins un polymère et ledit au moins un liant sont soumis à un mélange avec un temps de séjour dans ledit dispositif de cisaillement élevé de plus de 0,20 seconde.

13. Procédé de fabrication d'un composite de liant polymère selon la revendication 1, dans lequel ledit au moins un polymère et ledit au moins un liant sont soumis à un mélange où la quantité scalaire de cisaillement est de plus de 250.

14. Procédé de fabrication d'un composite de liant polymère selon la revendication 1, dans lequel ledit au moins un polymère et ledit au moins un liant sont soumis à un mélange où la quantité scalaire de cisaillement est de plus de 1000.

15. Procédé de fabrication d'un composite de liant polymère selon la revendication 1, dans lequel ledit au moins un polymère et ledit au moins un liant sont soumis à un mélange où l'énergie utilisée est supérieure à une énergie de 0,025 kW/kg dans le dispositif de cisaillement élevé.

16. Procédé de fabrication d'un composite de liant polymère selon la revendication 1, dans lequel ledit au moins un polymère et ledit au moins un liant sont soumis à un mélange où l'énergie utilisée est supérieure à une énergie de 0,05 kW/kg dans le dispositif de cisaillement élevé.

17. Procédé de fabrication d'un composite de liant polymère selon la revendication 1, dans lequel ledit au moins un polymère et ledit au moins un liant sont soumis à un mélange où l'énergie utilisée est supérieure à une énergie de 0,10 kW/kg dans le dispositif de cisaillement élevé.

18. Composite de liant polymère comprenant :

plus de 50% en poids d'au moins un polymère et au moins un liant mélangés ensemble dans un dispositif de cisaillement élevé afin de former un mélange composite stable aux températures normales et pouvant être stocké sans chauffage.

19. Composite de liant polymère selon la revendication 18, comprenant plus de 90% en poids dudit au moins un polymère.

20. Composite de liant polymère selon la revendication 18, dans lequel ledit au moins un liant est du bitume.

21. Composite de liant polymère selon la revendication 18, dans lequel ledit au moins un polymère est à une concentration de moins de 99,9 % en poids.

22. Composite de liant polymère selon la revendication 18, dans lequel ledit au moins un polymère et ledit au moins un liant sont mélangés ensemble dans ledit dispositif de cisaillement élevé pendant moins de 3 minutes.

23. Composite de liant polymère selon la revendication 18, dans lequel ledit mélange composite formé en mélangeant ledit au moins un polymère et ledit au moins un liant est réalisé en granulés.

24. Composite de liant polymère selon la revendication 18, dans lequel ledit mélange composite est rapidement soluble quand il est mélangé au liant supplémentaire.

25. Composite de liant polymère selon la revendication 18, dans lequel ledit au moins un polymère et ledit au moins un liant sont soumis à un mélange avec un temps de séjour dans le dispositif de cisaillement élevé de plus de 0,05 seconde.

26. Composite de liant polymère selon la revendication 18, dans lequel ledit au moins un polymère et ledit au moins un liant sont soumis à un mélange avec un temps de séjour dans ledit dispositif de cisaillement élevé de plus de 0,10 seconde.

27. Composite de liant polymère selon la revendication 18, dans lequel ledit au moins un polymère et ledit un liant sont soumis à un mélange avec un temps de séjour dans ledit dispositif de cisaillement élevé de plus de 0,20 seconde.

28. Composite de liant polymère selon la revendication 18, dans lequel ledit au moins un polymère et ledit au moins un liant sont soumis à un mélange où la quantité scalaire de cisaillement est de plus de 250.

29. Composite de liant polymère selon la revendication 18, dans lequel ledit au moins un polymère et ledit au moins un liant sont soumis à un mélange où la quantité scalaire de cisaillement est de plus de 1000.

30. Composite de liant polymère selon la revendication 18, dans lequel ledit au moins un polymère et ledit au moins un liant sont soumis à un mélange où l'énergie utilisée est supérieure à une énergie de 0,025 kW/kg dans le dispositif de cisaillement élevé.

31. Composite de liant polymère selon la revendication 18, dans lequel ledit au moins un polymère et ledit au moins un liant sont soumis à un mélange où l'énergie utilisée est supérieure à une énergie de 0,05 kW/kg dans le dispositif de cisaillement élevé.

32. Composite de liant polymère selon la revendication 18, dans lequel ledit au moins un polymère et ledit au moins un liant sont soumis à un mélange où l'énergie utilisée est supérieure à une énergie de 0,10 kW/kg dans le dispositif de cisaillement élevé.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 53314935 B, Chaverot
- US 4242246 A, Maldanado
- US 7202290 B, Stuart, Jr.
- US 5393819 A